# EUROPÄISCHE PATENTSCHRIFT

(11) **EP 2 455 613 B1**
(45) Veröffentlichungstag und Bekanntmachung des Hinweises auf die Patenterteilung: **22.11.2017**
(21) Anmeldenummer: 11183327.3
(22) Anmeldetag: 29.09.2011
(51) Int. Cl.: F04B 39/16, B01D 53/04, B01D 53/26, B60T 17/00, B60T 17/02

(54) **Lufttrocknungskartusche**
Air drying cartridge
Cartouche de séchage à air

(30) Priorität: 08.10.2010 DE 102010038064
(43) Veröffentlichungstag der Anmeldung: 23.05.2012
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- WO-A1-00/32298
- WO-A1-2007/045318
- DE-A1-102009 011 824
- US-A- 6 125 553
- US-A1- 2010 052 893
- US-B1- 6 558 444

## Beschreibung

### TECHNISCHES GEBIET DER ERFINDUNG

Die Erfindung betrifft ein Verfahren zum Betrieb einer eine Lufttrocknungskartusche aufweisenden Druckluftaufbereitungsanlage eines Fahrzeugs.

### STAND DER TECHNIK

Aus dem Stand der Technik bekannte Lufttrocknungskartuschen dienen der Beseitigung von Feuchtigkeit in Druckluftanlagen geförderter Druckluft. Die Beseitigung der Feuchtigkeit und damit der Einsatz von Lufttrocknungskartuschen ist notwendig, da in der Druckluft enthaltene Feuchtigkeit die Funktion der beteiligten pneumatischen Bauelemente beeinträchtigen kann oder die Feuchtigkeit kondensieren kann und/oder im Winterbetrieb gefrieren kann. Neben der Beseitigung von Feuchtigkeit aus der geförderten Druckluft kann darüber hinaus mittels der Lufttrocknungskartusche auch eine Beseitigung weiterer unerwünschter Fremdstoffe wie beispielsweise von Partikeln oder einem Ölnebel, welcher dem Kompressor entstammen kann, erfolgen. Die unerwünschten Beeinträchtigungen infolge von nicht beseitigter Feuchtigkeit, Partikeln und Ölnebel können schlimmstenfalls zu einem Versagen der Druckluftanlage führen. Üblicherweise ist zur Vermeidung der genannten Beeinträchtigungen eine Lufttrocknungskartusche in einer Druckluftanlage eines Fahrzeugs zwischen eine Druckluftquelle, insbesondere einen Kompressor, und eine zu verschiedenen Betriebsbremskreisen verzweigende Zentralleitung der Druckluftanlage zwischengeordnet.

In den Lufttrocknungskartuschen kommen Trocknungs- und/oder Filtermedien zum Einsatz, deren Aufnahmekapazität für die Feuchtigkeit oder anderweitige zu beseitigende Fremdstoffe begrenzt ist. Dies macht den Einsatz eines wechselseitigen Betriebs mit Lastphasen, in welchen Druckluft von der Druckluftquelle zwecks Reinigung derselben durch die Lufttrocknungskartusche beispielsweise in die Zentralleitung gefördert wird, sowie Regenerationsphasen, in welchen bereits gereinigte Druckluft in umgekehrter Richtung die Lufttrocknungskartusche durchströmt, womit in der Lufttrocknungskartusche angesammelte Feuchtigkeit und Fremdstoffe mitgenommen werden und in die Umgebung abgeführt werden, erforderlich.

Vielfältiger Stand der Technik existiert hinsichtlich einer so genannten "Loader-Unloader"-Regelung, bei welcher eine Drucksteuerung in der Druckluftanlage bei fortgesetzter Förderung durch den Kompressors in die Zentralleitung und zu den Verbraucherkreisen oder in die Umgebung erfolgt, sowie hinsichtlich einer Steuerung der Förderleistung des Kompressors (so genannte "Governor-Steuerung"), um in der Druckluftanlage die Druckluftverhältnisse zu beeinflussen.

Weiterhin ist vielfältiger Stand der Technik bekannt zur Verfahrenssteuerung zur Anpassung einer Förderleistung eines Kompressors, einer Dauer einer Lastphase eine Kompressors, zur Ermittlung, Vorgabe und Anpassung eines Abschaltdrucks des Kompressors, zur Anpassung mindestens eines Systemdrucks in einem Betriebskreis der Luftaufbereitungsanlage, zur Anpassung eines Regenerationsluftstroms oder einer Regenerationszeitdauer und der Druckluftmengensteuerung für die Lastphase sowie Regenerationsphase. Lediglich beispielhaft wird hinsichtlich unterschiedlicher Verfahren zur Gestaltung der Druckluftströme und der hiermit verbundenen konstruktiven Ausgestaltungen auf die Druckschriften DE 10 2008 006 860 A1, EP 1 394 415 A2, DE 10 252 975 A1, EP 1 183 172 B1, WO 2006/004493 A1, WO 2006/071-170A1, DE 10 359 739 A1, WO 2006/106891 A1 und DE 4 219 101 A1 verwiesen. Weiterer Stand der Technik zu Verfahren zur Regenerationssteuerung ist bekannt aus DE 10 2005 033-083 B3, EP 1 390 244 B1 und EP 2 123 343 A1. WO 2008/043403 A1 offenbart eine Ermittlung von Parametern oder Kenngrößen einer unbekannten Druckluftaufbereitungsanlage, beispielsweise mit unbekannter Behältergröße und/oder Kompressorförderleistung in einem Parametrisierungs-Betrieb.

Lufttrockner können als sogenannte Mono-Tower mit lediglich einer Lufttrocknungskartusche ausgebildet sein, wobei hinsichtlich der konstruktiven Ausgestaltung und der einsetzbaren Filter- und Trocknungsmedien und -schichten auf die Druckschriften EP 1 635 930 B1, EP 1-048541 A1, GB 1 136 052 A1, US 5,427,609 A1, WO 01/26783 A1, DE 69 124 494 T2, DE 10-313 575 A1, WO 01/52973 A1, WO 02/074422 A1, WO 04/103509 A2, US 3,796,025, DE 10-2005 039 059 B3, DE 10 2004 059 508 A1 und DE 10 351 837 B4 verwiesen wird. Ebenfalls möglich ist die Ausgestaltung von Lufttrocknern als sogenannte "Twin-Tower", wie diese beispielsweise in der nicht vorveröffentlichten Patentanmeldung DE 10 2010 031 306.8-14 oder den Druckschriften US 5,685,896, EP 0,933,117 A1, US 5,961,698, US 5,901,459, US 5,901,-464 und US 5,983,516 beschrieben sind.

Im Betrieb von Druckluftanlagen mit Lufttrocknungskartuschen kommt es immer wieder zu Beschwerden der Kunden, welche auf eine unzureichende Lufttrocknung, eine zu geringe Lebensdauer der Lufttrocknungskartusche, Beeinträchtigungen des Betriebs der Luftaufbereitungsanlage und ähnliches gestützt sind.

Die gattungsbildende Patentanmeldung WO 2007/045318 A1 beschreibt, dass unterschiedliche Lufttrocknungskartuschen mit gleichen Anschlussmaßen existieren, die unterschiedliche Wirkungsweisen und Trocknungs- bzw. Reinigungsleistungen aufweisen. Angesichts der identischen Anschlussmaße kommt es immer wieder vor, dass im Zuge einer Reparatur oder eines Services beim Austausch der Lufttrocknungskartusche eine Lufttrocknungskartusche mit Eigenschaften aufgeschraubt wird, die mit dem Luftaufbereitungssystem des Fahrzeugs nicht oder nur schlecht kompatibel ist, wodurch die Laufleistung des Systems erheblich reduziert werden kann. Schlimmstenfalls wird die unzureichende Trocknungs- oder Reinigungsleistung erst im Schadensfall bemerkt. Die Patentanmeldung schlägt vor, die Lufttrocknungskartusche mit einem Identifikationsmittel auszustatten, dessen Informationsgehalt durch eine Erfassungseinrichtung erfasst wird. Die derart übertragenen und erfassten Informationen sollen gewährleisten, dass beim Wechsel der Lufttrocknungskartusche keine falsche Lufttrocknungskartusche aufgeschraubt wird. Beispielsweise kann das Identifikationsmittel einen Transponder umfassen mit einem darin enthaltenen Code, der durch eine elektromagnetische Erfassungseinrichtung auslesbar ist. Ebenfalls kann das Identifikationsmittel einen Barcode umfassen, der durch eine optische Erfassungseinrichtung auslesbar ist. Die Erfassungseinrichtung kann in ein Steuergerät der Luftaufbereitungseinrichtung integriert sein. Das Identifikationsmittel kann Informationen über den Typ der Lufttrocknungskartusche selbst beinhalten oder die Lufttrocknungskartusche individuell kennzeichnen, was nützlich sein soll im Hinblick auf die Sicherstellung der geeigneten Serviceintervalle. Bei Übertragung der Informationen über einen Code kann der Code mit gespeicherten Daten verglichen werden zwecks Erkennung des Typs der Lufttrocknungskartusche. Bei Erkennung eines nicht vorgesehenen Typs einer Lufttrocknungskartusche kann ein Warnsignal erzeugt werden. Ein Steuergerät kann eine Erfassungseinrichtung mit einer Sende- und Empfangsantenne, einem Decoder, einem mit dem Decoder in Verbindung stehenden Mikrocontroller, einer Schnittstelle zur seriellen Kommunikation, einem Stecker, einem Schreib- und Lesespeicher und einem Netzteil besitzen. Codierte empfangene Signale können durch den Decoder decodiert werden und mit in dem Speicher gespeicherten Daten verglichen werden. Beispielsweise erfolgt eine Überprüfung des Typs der eingesetzten Lufttrocknungskartusche immer dann, wenn die Zündung des Fahrzeugs eingeschaltet wird. Neben der beschriebenen Überwachung des richtigen Typs der Lufttrocknungskartusche kann das System auch der Optimierung der Wartung dienen. Zu diesem Zweck kann das Steuergerät Daten enthalten wie die Echtzeit, das Datum, eine maximal noch zulässige Fahrstrecke oder Betriebszeit. Die Patentanmeldung schlägt vor, die Abnutzung der Lufttrocknungskartusche unter Berücksichtigung von Informationen einer Motormanagementeinheit und der Laufzeit abzuschätzen, die noch maximal zulässige Laufzeit des Filters zu ermitteln, zu überprüfen, ob der Filterwechsel bereits vollzogen wurde, eine Überprüfung vorzunehmen, ob die passende Filterpatrone eingesetzt wurde, Daten mit der Kilometerinformation und der Echtzeitinformation zu verknüpfen und das Regenerationsverhalten anzupassen. Informationen im Hinblick auf ein normales oder ein reduziertes Serviceintervall resultieren dann aus einer Anpassung des Regenerationsverhaltens dadurch, dass bei reduziertem Wirkungsgrad der Lufttrocknungskartusche die Regenerationsluftmenge erhöht wird. Möglich ist eine Dokumentation einer Fehlermeldung aufgrund des Erkennens des Aufschraubens einer Lufttrocknungskartusche falscher Bauweise im Rahmen einer Offboard-Diagnose.

Die Patentanmeldung DE 10 2009 011 824 A1 betrifft ebenfalls die Ausstattung einer Lufttrocknungskartusche mit einem Identifikationsmittel, welches in diesem Fall selbst einen Speicher besitzt. Der Informationsgehalt des Speichers kann durch eine Erfassungseinrichtung außerhalb der Lufttrocknungskartusche erfasst und verändert werden. Vorzugsweise erfolgt eine elektrische Verbindung zwischen der Lufttrocknungskartusche und der Erfassungseinrichtung über einen Kontaktstift, der beispielsweise in einer Kopplungsrichtung beweglich und federvorgespannt sein kann. Hierbei kann eine elektrische Verbindung im montierten Zustand der Lufttrocknungskartusche über das Schraubgewinde, welches die Lufttrocknungskartusche mit der Luftaufbereitungsanlage koppelt, geschlossen werden. Möglich ist, dass in die Lufttrocknungskartusche auch ein Sensor integriert ist, der als Temperatursensor, Feuchtigkeitssensor oder Kondensatsensor ausgebildet sein kann.

Die nicht gattungsgemäßen Druckschriften US 2010/0052893 A1, WO 00/32298 A1 und US 6,558,444 B1 betreffen eine Erkennung nicht bestimmungsgemäßer Komponenten wie eines Ölfilters oder eines Antriebsgurtes in einem Kompressor.

### AUFGABE DER ERFINDUNG

Der vorliegenden Erfindung liegt die Aufgabe zugrunde, ein Verfahren zum Betrieb einer Druckluftaufbereitungsanlage mit einer Lufttrocknungskartusche vorzuschlagen, mittels dessen die Betriebssicherheit erhöht wird.

### LÖSUNG

Die Aufgabe der Erfindung wird gelöst mit einem Verfahren zum Betrieb einer eine Lufttrocknungskartusche aufweisenden Luftaufbereitungsanlage gemäß Patentanspruch 1. Weitere Ausgestaltungen eines erfindungsgemäßen Verfahrens ergeben sich entsprechend den abhängigen Patentansprüchen 2 bis 13.

### BESCHREIBUNG DER ERFINDUNG

Die vorliegende Erfindung betrifft eine Lufttrocknungskartusche in beliebiger konstruktiver Ausgestaltung, wie diese beispielsweise aus dem Eingangs aufgelisteten Stand der Technik hervorgeht. Die Lufttrocknungskartusche findet Einsatz für eine Druckluftanlage eines Fahrzeugs, insbesondere eines Nutzfahrzeugs. Die vorliegende Erfindung basiert auf der Erkenntnis, dass in vielen Fällen Beschwerden der Nutzer der Lufttrocknungskartusche bzw. der Druckluftanlage eines Fahrzeugs oder Beeinträchtigungen des Betriebs darauf basieren, dass in der Druckluftanlage des Fahrzeugs nicht die bestimmungsgemäße Lufttrocknungskartusche eingesetzt worden ist, sondern absichtlich oder unabsichtlich eine Lufttrocknungskartusche eines falschen Typs, eines falschen Herstellers, mit einer falschen Baugröße oder auch aus einer abgelaufenen Charge eingesetzt ist. Die Auslegung und das Verfahren zum Betrieb der Druckluftanlage ist herstellerseitig aber abgestimmt auf die vom Hersteller ausgewählte Lufttrocknungskartusche (*"bestimmungsgemäße Lufttrocknungskartusche*"). Bei Einsatz der nicht bestimmungsgemäßen Lufttrocknungskartusche wird dann die Druckluftanlage unter Umständen suboptimal betrieben. Um lediglich einige Beispiele zu nennen, kann während der Lastphase die Druckluft ungenügend durch die nicht bestimmungsgemäße Lufttrocknungskartusche getrocknet oder gereinigt werden. Die vorgegebenen Druckluftströme in der Lastphase sowie in der Regenerationsphase, insbesondere die Abschaltdrücke, die Zeitdauern der unterschiedlichen Phasen, Öffnungszeiten der beteiligten Ventile und ähnliches sind für die nicht bestimmungsgemäße Lufttrocknungskartusche unter Umständen ungeeignet. Möglich ist, dass die nicht bestimmungsgemäße Lufttrocknungskartusche bereits an sich eine geringere Lebensdauer als die bestimmungsgemäße Lufttrocknungskartusche hat oder sich deren Lebensdauer angesichts der suboptimalen Betriebsweise der Druckluftanlage verringert. Ein weiteres Problem stellen Lufttrocknungskartuschen dar, welche von Produktpiraten preisgünstig auf den Markt gebracht werden und dieselben Anschlussmaße besitzen wie die bestimmungsgemäßen Lufttrocknungskartuschen, aber minderwertig ausgebildet sind mit einem veränderten konstruktiven Aufbau, veränderten eingesetzten Materialien beispielsweise für die Filter- und Trockenmedien, mit veränderten Fertigungstoleranzen und ähnliches. Möglich ist schließlich auch, dass ein Hersteller eines Fahrzeugs oder einer Druckluftanlage wünscht, dass diese in jedem Fall nur mit einem Typ einer Lufttrocknungskartuschen, beispielsweise dieses Herstellers oder eines ausgewählten Zulieferers, betrieben wird.

In dem erfindungsgemäßen Verfahren werden automatisiert in der Druckluftaufbereitungsanlage eines Fahrzeugs Informationen betreffend den Typ der Lufttrocknungskartusche erfasst und verarbeitet. Hierbei erfolgt eine Anpassung der Betriebsweise der Luftaufbereitungsanlage automatisch an die automatisiert erfassten Informationen betreffend den Typ der Lufttrocknungskartusche.

Erfindungsgemäß wird bei automatischer Erkennung eines nicht bestimmungsgemäßen Typs der Lufttrocknungskartusche die Förderleistung des Kompressors automatisch angepasst, eine Dauer einer Lastphase des Kompressors verändert und/oder eine Anpassung eines Abschaltdrucks des Kompressors durchgeführt. Um hier lediglich ein Beispiel zu nennen, kann aus Vorsichtsgründen die Zeitdauer der Lastphase bei Erkennen einer falschen Lufttrocknungskartusche vergrößert oder verkleinert werden. Ebenfalls denkbar ist, dass eine Anpassung mindestens eines Systemdrucks in einem Betriebskreis der Luftaufbereitungsanlage erfolgt.

Zusätzlich zu der genannten Anpassung kann eine Anpassung der Betriebsweise auch wie folgt erfolgen:
Um lediglich einige Beispiele zu nennen, kann für den Fall, dass ein nicht bestimmungsgemäßer Typ der Lufttrocknungskartusche detektiert wird, ein Fehlersignal erzeugt werden. Dieses Fehlersignal kann beispielsweise ein für den Fahrer hör- oder sichtbares Signal sein, welches an beliebiger Stelle des Fahrzeugs, insbesondere in der Fahrerkabine, erzeugt wird.

Ebenfalls möglich ist die Erzeugung eines Fehlersignals durch automatisierte Beeinflussung des pneumatischen Zustands der Druckluftanlage oder Luftaufbereitungsanlage. Um hier lediglich ein Beispiel zu nennen kann für ein geparktes Fahrzeug das Lösen der Feststellbremse durch eine geeignete Steuereinrichtung unterbunden werden, wenn ein nicht bestimmungsgemäßer Typ der Lufttrocknungskartusche ermittelt worden ist. Vorzugsweise erfolgt dies allerdings nur dann, wenn über andere geeignete Maßnahmen erkannt wird, dass sich das Fahrzeug in einem Betriebshof oder einer Werkstatt befindet oder dies lediglich erfolgt in zeitlicher Umgebung des Austausches einer Lufttrocknungskartusche.

Auch denkbar ist eine Anpassung der vorbestimmten Restnutzungszeit der Lufttrocknungskartusche oder der vorbestimmten Zeitspanne bis zu dem nächsten Werkstattaufenthalt für das Fahrzeug. Beispielsweise kann das Wartungsintervall verkürzt werden, damit mit der nicht bestimmungsgemäßen Lufttrocknungskartusche die Werkstatt früher als für die bestimmungsgemäße Lufttrocknungskartusche aufzusuchen ist. Ebenfalls möglich ist, dass bei automatischer Erkennung eines nicht bestimmungsgemäßen Typs der Lufttrocknungskartusche automatisiert eine Anpassung eines Regenerationsluftstroms oder einer Regenerationszeitdauer erfolgt, indem beispielsweise die Regenerationszeitdauer erhöht wird, um einem unter Umständen verschlechterten Regenerationsverhalten der nicht bestimmungsgemäßen Lufttrocknungskartusche Rechnung zu tragen. Die vorgenannten Maßnahmen sind lediglich beispielhaft angeführt - grundsätzlich können sämtliche Verfahrensparameter zur Steuerung der Druckluftströme in der Druckluftanlage, welche in dem eingangs genannten Stand der Technik angeführt sind, beeinflusst werden, wenn erfindungsgemäß automatisch erkannt wird, dass ein nicht bestimmungsgemäßer Typ der Lufttrocknungskartusche eingesetzt ist.

Unter Umständen alternativ oder kumulativ zu einer automatischen Beeinflussung der Verfahrensgestaltung und/oder einer Erzeugung eines Fehlersignals kann bei automatischer Erkennung eines nicht bestimmungsgemäßen Typs der Lufttrocknungskartusche ein Eintrag in einen Fehlerspeicher erfolgen. Wird dann zu einem späteren Zeitpunkt eine Werkstatt aufgesucht, kann dort aus dem Fehlerspeicher ausgelesen werden, dass eine nicht bestimmungsgemäße Lufttrocknungskartusche verwendet worden ist. Dies ist von erhöhter Bedeutung bei etwaigen Beschwerden eines Kunden oder sogar bei der Untersuchung der Schadensursache eines Unfalls, für welchen ein nicht ordnungsgemäßes Trocknungsverhalten einer Lufttrocknungskartusche verantwortlich sein könnte.

Möglich ist im Rahmen der vorliegenden Erfindung auch, dass bei automatischer Erkennung eines nicht bestimmungsgemäßen Typs der Lufttrocknungskartusche automatisiert eine Information an den Fahrer übermittel wird. Bei dieser Information kann es sich beispielsweise darum handeln, dass der Fahrer darüber informiert wird, dass er angesichts der Verwendung des nicht bestimmungsgemäßen Typ der Lufttrocknungskartusche Garantieansprüche verliert und/oder eine Lebensdauer der Lufttrocknungskartusche oder der gesamten Druckluftanlage vermindert ist.

In weiterer Ausgestaltung der Erfindung wird vorgeschlagen, die Lufttrocknungskartusche mit einem Indikationsorgan auszustatten. Mit dem Indikationsorgan wird der Typ der Lufttrocknungskartusche indiziert. Diese Indikation erfolgt derart, dass eine automatische Erfassung von Informationen betreffend den Typ der Lufttrocknungskartusche in dem Fahrzeug ermöglicht ist. Beispielsweise kann eine Erfassung der genannten Information betreffend den Typ der Lufttrocknungskartusche in einem Lufttrockner oder einer Luftaufbereitung erfolgen. Hierbei bezeichnet ein *"Typ einer Lufttrocknungskartusche"* beispielsweise einen Herstellertyp, einen Typ einer konstruktiven Ausgestaltung der Lufttrocknungskartusche, eine Größe der Lufttrocknungskartusche, eine Ausführungsvariante der Lufttrocknungskartusche oder auch eine Charge der Herstellung der Lufttrocknungskartusche, also eine Lufttrocknungskartusche welche in einem Zeitraum von x bis y hergestellt ist, einen Herstellungsort der Kartusche und ähnliches. Das Indikationsorgan kann hierbei im Rahmen der vorliegenden Erfindung beliebig ausgebildet sein, sofern eine automatische Übergabe der Informationen zu dem Typ der Lufttrocknungskartusche an benachbarte Bauelemente der Druckluftanlage oder des Fahrzeugs ermöglicht ist. Um lediglich einige Beispiele zu nennen kann diese Übergabe durch das Indikationsorgan optisch, elektrisch, magnetisch, elektromagnetisch, mechanisch durch Wellen oder Strahlung oder ähnliches erfolgen, ohne dass die Erfindung auf diese Beispiele begrenzt ist.

Unmittelbar mit dem Aufschrauben oder Verbinden der Lufttrocknungskartusche mit dem Lufttrockner oder der Druckluftanlage, zeitlich verzögert hierzu, mit Inbetriebnahme der Druckluftanlage oder zu einem sonstigen beliebigen Betriebszeitpunkt der Druckluftanlage werden erfindungsgemäß automatisch über das Indikationsorgan Informationen betreffend den Typ der Lufttrocknungskartusche weitergegeben, in dem beispielsweise die Übergabe der Informationen von dem Indikationsorgan an das Fahrzeug, den Lufttrockner, eine Luftaufbereitung oder eine beliebige andere Komponente des Fahrzeugs erfolgt. Erfindungsgemäß kann somit detektiert werden, um welchen Typ der Lufttrocknungskartusche es sich handelt, also auch, ob eine Lufttrocknungskartusche verwendet wird, die nicht bestimmungsgemäß ist.

Möglich ist, dass das Indikationsorgan außen frei sichtbar ist, sodass der Benutzer eine Art Warnung erhält, dass hier besondere Vorkehrungen gegenüber der Nutzung einer nicht bestimmungsgemäßen Lufttrocknungskartusche getroffen worden sind. Möglich ist aber auch, dass das Indikationsorgan nicht nach außen sichtbar ist. In besonderer Ausgestaltung der Erfindung ist das Indikationsorgan in einer Ausnehmung und/oder hinter einem Vorsprung angeordnet oder anderweitig abgedeckt. Hier kann das Indikationsorgan durch die Ausnehmung oder an dem Vorsprung vorbei mit einem benachbarten Bauelement kommunizieren, also die Information betreffend den Typ der Lufttrocknungskartusche übergeben. Dennoch ist das Indikationsorgan unter Umständen, zumindest bei einer flüchtigen Betrachtung durch den Benutzer, verborgen, so dass dieser die Sicherungsfunktion für den Einsatz bestimmungsgemäßer Lufttrocknungskartuschen nicht ohne Weiteres erkennen kann.

Im Folgenden werden mögliche Ausgestaltungen des Indikationsorgans beispielhaft aufgeführt, wobei beliebige anderweitige Ausgestaltungen selbstverständlich von der vorliegenden Erfindung ebenfalls umfasst sein sollen:
Gemäß einem Vorschlag der Erfindung ist als Indikationsorgan ein Material eines Bauelements mit einem (von außen) sensierbaren Zusatzstoff dotiert. Beispielsweise kann es sich bei dem Zusatzstoff um ein sogenanntes "Seltenerdmetall" handeln. Über eine Spektroskopie, die entweder durch eine Komponente des Fahrzeugs durchgeführt wird oder werkstoffseitig mit einem entsprechenden Spektroskopiegerät durchgeführt wird, kann dann ermittelt werden, ob es sich um eine bestimmungsgemäße Lufttrocknungskartusche handelt, indem geprüft wird, ob das Material des Bauelements der Lufttrocknungskartusche tatsächlich mit dem Seltenerdemetall dotiert ist. Um lediglich ein weiteres Beispiel zu nennen, könnte das Material des Bauelements der Lufttrocknungskartusche mit einem fluoreszierenden Zusatzstoff dotiert sein. Wird dann das Material, beispielsweise durch eine Diode der Druckluftanlage, beleuchtet, kann mit der Aktivierung der Diode über eine Erfassung des fluoreszierenden Effekts darauf geschlossen werden, ob es sich um die bestimmungsgemäße Lufttrocknungskartusche handelt.

Gemäß einem weiteren Vorschlag der Erfindung besitzt das Indikationsorgan eine mit dem Typ der Lufttrocknungskartusche korrelierende Kontur. Zum Erfassen der Information betreffend den Typ der Lufttrocknungskartusche wird dann automatisiert diese Kontur erfasst. Dies kann beispielsweise durch laseroptische Abtastung der Kontur erfolgen. Ebenfalls möglich ist eine mechanische Abtastung der Kontur über einen die Kontur abfahrenden Stift, welcher beispielsweise mit dem Einschrauben der Lufttrocknungskartusche in den Lufttrockner entlang der Kontur verfahren wird. Ebenfalls möglich ist die Ausbildung der Kontur in der Art eines Schlüssels, der dann mit einem benachbarten Bauelement des Lufttrockners oder der Druckluftanlage in Wechselwirkung tritt. Nur bei vorgegebener Kontur des "Schlüssel" wird dann ein Schaltsignal auslöst, dass der bestimmungsgemäße Typ der Lufttrocknungskartusche vorhanden ist.

Möglich ist auch, dass die Lufttrocknungskartusche mit einer optischen Kennung, beispielsweise einem Barcode versehen ist, die dann von einem Bauelement, welches mit der Lufttrocknungskartuschen in Wechselwirkung tritt, abgetastet wird.

Entsprechend einem weiteren erfindungsgemäßen Vorschlag ist das Indikationsorgan mit einem Sender gebildet, über welchen Informationen zum Typ der Lufttrocknungskartusche übertragbar sind zu einem benachbarten Bauelement wie dem Lufttrockner. In besonderer Ausgestaltung dieses Lösungsgedankens ist das Indikationsorgan mit einem RFID-Transponder ausgestattet. Die Radio Frequency Identification (RFID) ist ein Verfahren, um Daten berührungslos über begrenzte Entfernungen, unter Umständen auch ohne Sichtkontakt übertragen und speichern zu können. Unter RFID wird eine komplexe technische Infrastruktur verstanden in vielfältiger Ausgestaltung, welche dem Fachmann aus der einschlägigen Fachliteratur und Lehrbücher bekannt ist. Beispielsweise fanden bisher RFID-Transponder Einsatz im Straßenverkehr für Mautsysteme, Zugangskontrollen, bargeldloses Zahlen, Skipässe, Tankkarten, elektronische Wegfahrsperren, als Schlüsselersatz, als Fahrzeugidentifikation in Ergänzung zum Nummernschild, für eine Identifikation von Banknoten, als Tier- und Patientenidentifikation, für Zutrittskontrollen und Zeiterfassung, elektronische Geldbörsen, Ticketing in U-Bahnen, Bussen und als Universitäts- und Studentenausweis im Waren- und Bestandsmanagement, als Echtheitsnachweis für Medikamente, Etiketten. DE 10 052 444 A1 beschreibt den Einsatz von RFID-Etiketten zum automatisierten Versenden von Gegenständen wie Gepäckstücken, wobei das RFID-Etikett nach Erreichen eines Zielorts für einen nachfolgenden Transportvorgang mehrfach beschrieben werden kann. DE 20 121 245 U1 beschreibt den Einsatz eines RFID-Transponders für auslesbare Mitgliedsausweise, während die Druckschriften DE 10 220 502 A1 und DE 10 328 836 A1 den Einsatz von RFID-Transpondern für Behälter oder Kästen aus Kunststoff beschreiben. DE 10 2004 043 060 A1 beschreibt den Einsatz eines RFID-Transponders für eine Spritzgießmaschine mit auswechselbaren Werkzeugen zur prozesssicheren und automatischen Identifizierung des auswechselbaren Werkzeugs. WO 02/42995 A1 offenbart die Verwendung eines RFID-Transponders für Festplattenlaufwerke. DE 10 2005 047638-A1 offenbart den Einsatz eine RFID-Transponders zur Identifikation eines Bauelements eines Kraftfahrzeugs, beispielsweise eines Hydraulikventils bei dessen Bewegung durch eine Fertigungsstraße oder Montagestraße. Erfindungsgemäß findet ein derartiger RFID-Transponder erstmalig Einsatz für eine Lufttrocknungskartusche. Hierbei kann der RFID-Transponder einen permanenten Speicher besitzen, der mehrfach beschreibbar sein kann oder ein permanenter statischer Speicher sein kann. Möglich ist, dass der RFID-Transponder mit einem magnetischen (HF) oder elektromagnetischen (UHF) Feld arbeitet. Die Lufttrocknungskartusche kann mit einer Energieversorgungseinheit für das RFID-Element, insbesondere einer Batterie oder einem Akku, ausgestattet sein. Möglich ist aber auch, dass das RFID-Element ohne eigene Energieversorgung ausgebildet ist, wobei dann eine Versorgungsspannung durch Induktion aus Funksignalen von einer Basisstation, beispielsweise im Bereich des Lufttrockners oder der Luftaufbereitungsanlage, gewonnen werden kann. Ein Betrieb des RFID-Elements kann bei niedrigen Frequenzen (30-500 kHz), mittleren Frequenzen (10-15 MHz) oder hohen Frequenzen (850-950 MHz, 2,4-2,5 GHz, 5,8 GHz) erfolgen. Weitere Informationen zu RFID-Systemen sind beispielsweise beschrieben in den Druckschriften
Robert Schoblick, "RFID", ISBN 3772359205 und
Klaus Finkenzeller, "RFID-Handbuch", ISBN 3446220712.

Inzwischen ist eine RFID-Technologie mit verhältnismäßig geringen Kosten realisierbar. Eine Übertragung von Informationen mit einer RFID-Technologie ist auch möglich, wenn eine Kontamination der umgebenden Bauelemente mit Fremdkörpern wie Schmutz oder Öl gegeben ist. Von besonderem Vorteil ist der Einsatz eines RFID-Transponders, wenn dieser in einem Gehäuse aus Kunststoff eingebettet oder im Inneren desselben angeordnet ist.

Das RFID-Element kann Informationen speichern und senden, beispielsweise zu dem Typ, der Produktkennung, der Baugröße, der Charge, dem Fertigungszeitraum und ähnliche Informationen. Ebenfalls möglich ist, dass das RFID-Element der Lufttrocknungskartusche Signale empfängt und speichert von einem benachbarten Bauelement wie dem Lufttrockner oder der Luftaufbereitungsanlage, beispielsweise Betriebskenngrößen der Lufttrocknungskartusche wie Gesamtdauern der Lastlaufphasen und/oder Regenerationsphasen, ermittelte Feuchten der Druckluft stromaufwärts oder stromabwärts der Lufttrocknungskartusche, Druckverhältnisse und ähnliches.

In weiterer Ausgestaltung der Erfindung ist in ein Gehäuse der Lufttrocknungskartusche eine CPU mit einer Speichereinheit integriert. Mittels der CPU können bspw. Betriebsdaten bearbeitet werden und/oder eine Übergabe von Informationen betreffend des Typs der Lufttrocknungskartusche gesteuert werden. Hingegen können in der Speichereinheit Informationen betreffend den Typ der Lufttrocknungskartuschen und weitere Informationen und Daten gespeichert werden.

Möglich ist, dass die Speichereinheit einen Speicherbereich aufweist, in welchem Daten hinsichtlich des Herstellers der Lufttrocknungskartusche gespeichert werden. Werden diese Informationen über das Indikationsorgan übertragen, können Lufttrocknungskartuschen erkannt werden, die nicht von dem bestimmungsgemäßen Hersteller entstammen. Entsprechendes gilt für einen Speicherbereich, in welchem Informationen betreffend die Bauart der Lufttrocknungskartusche, insbesondere betreffend einen Produkttyp oder eine Produktgröße, abgelegt sind. Ebenfalls möglich ist, dass ein Speicherbereich in der Speichereinheit vorgehalten ist, in welchem Informationen betreffend den Herstellungsprozess der Lufttrocknungskartusche, beispielsweise ein Herstellungsdatum, eine aktuelle Nummer der in einem Produktzyklus hergestellten Lufttrocknungskartusche oder den Herstellungsprozess selbst betreffende Herstellungsbetriebsdaten gespeichert sind. Schließlich kann alternativ oder zusätzlich ein Speicherbereich für den Betrieb der Lufttrocknungskartusche betreffende Daten vorgehalten sein, in dem beispielsweise Regenerationsdauern, Lastbetriebsdauern, Abschaltdrücke, untere und obere Schwellwerte für Last- und Regenerationsphasen, erfasste Feuchtigkeitswerte, Druckwerte und ähnliches abgespeichert werden können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch einen Teil einer Druckluftanlage mit Luftaufbereitungsanlage, Lufttrockner und Lufttrocknungskartusche.
- **Fig. 2**: zeigt eine weitere Ausführungsform eines Teils einer Druckluftanlage mit Luftaufbereitungsanlage, Lufttrockner und Lufttrocknungskartusche.
- **Fig. 3**: zeigt schematisch ein erfindungsgemäßes Verfahren zum Betrieb einer Druckluftaufbereitungsanlage.

### FIGURENBESCHREIBUNG

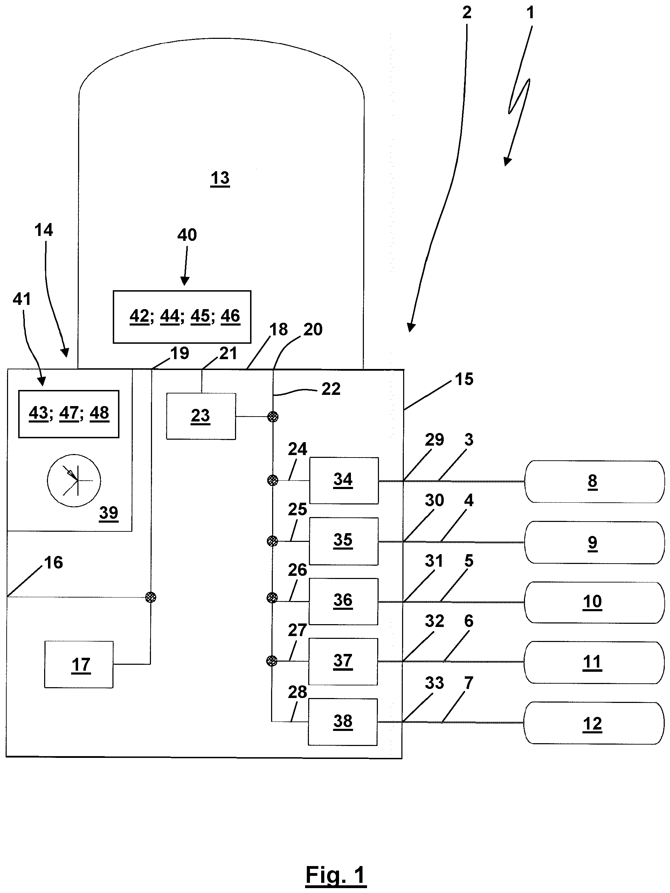

Fig. 1 zeigt schematisch eine Druckluftanlage 1 mit einer Luftaufbereitungsanlage 2. Die Luftaufbereitungsanlage 2 ist zwischen eine nicht dargestellte Druckluftquelle, insbesondere einen Kompressor, und Verbraucherkreise 3-7 zwischengeschaltet, die wie in Fig. 1 dargestellt mit Druckluftbehältern 8-12 ausgestattet sein können. Hierbei kann auch in einzelnen Verbraucherkreisen ein Druckluftbehälter entfallen, wobei in einem derartigen Fall dieser Verbraucherkreis unmittelbar über die Druckluftquelle mit Druckluft gespeist wird oder eine Querspeisung aus einem Druckluftbehälter eines anderen Verbraucherkreises möglich ist. Bei den Verbraucherkreisen 3-7 kann es sich um Betriebsbremskreise I, II, einen Luftfederungskreis, einen Nebenverbraucherkreis, einen Feststellbremskreis und einen Anhängerkreis u. ä. Verbraucherkreise handeln. In der Luftaufbereitungsanlage 2 durchströmt die Druckluft eine Lufttrocknungskartusche 13. Für die schematische Darstellung gemäß Fig. 1 ist die Luftaufbereitungsanlage 2 mit der Lufttrocknungskartusche 13 als eine integrale Baueinheit ausgebildet. Möglich ist, dass die Lufttrocknungskartusche 13 mit einem Lufttrockner 14 ein Modul der Luftaufbereitungsanlage 2, beispielsweise mit einem separaten Gehäuse und entsprechenden Anschlussmöglichkeiten für die Zu- und Abfuhr von Druckluft, ausgebildet ist. Für das dargestellte Ausführungsbeispiel ist der Lufttrockner 14 aber in ein gemeinsames Gehäuse 15 der Luftaufbereitungsanlage 2 integriert oder mit diesem eine modulare Einheit gebildet.

Das Gehäuse 15 der Luftaufbereitungsanlage 2 verfügt über einen Eingangsanschluss 16, welchem Druckluft über die Druckluftquelle, insbesondere von einem Kompressor, zugeführt wird. Für den Fall, dass die Luftaufbereitungsanlage 2 mit einer "Loader/Unloader"-Steuerung für die Druckluftzufuhr ausgestattet ist, ist der Eingangsanschluss 16 mit einem Druckregler 17 verbunden, über welchen bedarfsgerecht der Eingangsanschluss 16 mit einer Entlüftung verbunden werden kann. Parallel zu dem Druckregler 17 ist der Eingangsanschluss 16 mit dem Lufttrockner 14 verbunden, in welchem eine Schnittstelle 18 für die Lufttrocknungskartusche 13 vorgesehen ist. Diese Schnittstelle 18 ist zunächst geeignet gestaltet für eine mechanische Befestigung der Lufttrocknungskartusche 13 an dem Lufttrockner 14 bzw. dem Gehäuse 15. Dies erfolgt üblicherweise über ein Aufschrauben der Lufttrocknungskartusche 13 auf einen entsprechenden Gewindeanschluss des Lufttrockners 14 oder des Gehäuses 15. Darüber hinaus ist mit der Schnittstelle 18 ein Eingangsanschluss 19 sowie ein Ausgangsanschluss 20 sowie einen Regenerationsanschluss 21 gebildet, die mit dem Aufschrauben der Lufttrocknungskartusche pneumatisch dicht angekoppelt werden. In der Lastphase durchströmt Druckluft von dem Eingangsanschluss 16 durch den Eingangsanschluss 19 die Lufttrocknungskartusche 13 und darin die entsprechenden Filter- und Trocknungsmedien und tritt getrocknet und gereinigt aus dem Ausgangsanschluss 20 aus der Lufttrocknungskartusche 13 aus und in eine Zentralleitung 22 der Luftaufbereitungsanlage 2 ein. Hingegen durchströmt Druckluft, welche einem der Druckluftbehälter 8-12 entstammt, in einem Regenerationsbetrieb ein dann geöffnetes Regenerationsventil 23 und über einen Regenerationsanschluss 21 in umgekehrter Strömungsrichtung die Lufttrocknungskartusche 13 in umgekehrter Strömungsrichtung, wobei eine Teilumgehung von Teilbereichen und Medien der Lufttrocknungskartusche 13 erfolgen kann und abgesonderte Medien und Partikel aus der Lufttrocknungskartusche 13 zwecks Regeneration der Lufttrocknungskartusche 13 mitgenommen werden. In dem Regenerationsbetrieb tritt dann die Druckluft über den Eingangsanschluss 19 in die Luftaufbereitungsanlage 2 ein und wird (in nicht dargestellter Weise) in die Umgebung abgeführt.

Die Zentralleitung 22, in welche vorzugsweise zwischen Ausgangsanschluss 20 und dem Abzweig zu dem Regenerationsventil 23 ein Rückschlagventil integriert ist (nicht dargestellt), verzweigt in parallele Leitungszweige 24-28, welche über Ausgangsanschlüsse 29-33 pneumatisch mit den Verbraucherkreisen 3-7 verbunden sind. In die Leitungszweige 24-28 sind an sich bekannte Ventileinheiten integriert, um die unterschiedlichen aus dem Stand der Technik bekannten Funktionsweisen eines Mehrkreisschutzventils zu ermöglichen. Für das in Fig. 1 dargestellte Ausführungsbeispiel handelt es sich bei den in die Leitungszweige 24-28 integrierten Ventileinheiten um als Überströmventile 34-38 ausgebildete Kreisschutzventile.

In die Luftaufbereitungsanlage 2, insbesondere in das Gehäuse 15 derselben, ist eine elektronische Steuereinheit 39 (ECU) integriert, welche mit weiteren dem Fahrzeug oder anderen Komponenten zugeordneten Steuereinheiten kommunizieren kann, mit einem CAN-Bus verbunden sein kann und/oder über in Fig. 1 nicht dargestellte Steuerleitungen die Ventileinheiten der Luftaufbereitungsanlage 2, insbesondere den Druckregler 17, das Regenerationsventil 23 und/oder die Überströmventile 34-38, ansteuern kann, was durch unmittelbare elektrischen Ansteuerung bei Ausbildung der genannten Ventile als Magnetventile oder mittels elektropneumatischer Vorsteuerung erfolgen kann.

Erfindungsgemäß ist die Lufttrocknungskartusche 13 mit einem Indikationsorgan 40 ausgestattet. Das Indikationsorgan 40 tritt in Wechselwirkung mit einem Empfängerorgan 41, welches Bestandteil des Lufttrockners 14 oder der Luftaufbereitungsanlage 2 ist. Über die Wechselwirkung zwischen Indikationsorgan 40 und Empfängerorgan 41 erfolgt eine Übermittlung von Informationen von der Lufttrocknungskartusche 13 zu dem Empfängerorgan 41, also zu dem Lufttrockner 14 oder zu der Luftaufbereitungsanlage 2, wobei durchaus auch möglich ist, dass eine Wechselwirkung in umgekehrter Richtung erfolgt. Bei den zwischen Indikationsorgan 40 und Empfängerorgan 41 übertragenen Informationen handelt es sich in jedem Fall um solche, die den Typ der Lufttrocknungskartusche betreffen, worunter insbesondere eine Produktart oder ein Produkttyp, eine Baugröße, ein Hersteller, eine Bestimmungsinformation für einen Lufttrockner 14 oder eine Luftaufbereitungsanlage 2, in welchem oder welcher die Lufttrocknungskartusche 13 einsetzbar ist, oder ähnliches zu verstehen ist. Sofern eine Übertragung (auch) in umgekehrter Richtung erfolgt, handelt es sich beispielsweise um Betriebsparameter der Luftaufbereitungsanlage 2, insbesondere die Zahl der Last- und Regenerationsphasen, Dauern der Last- und Regenerationsphasen, Informationen betreffend die Druckverläufe und Schwellwerte des Drucks, gemessene Feuchtigkeitswerte, Gesamtbetriebsdauern u. ä..

Die Wechselwirkung zwischen Indikationsorgan 40 und Empfängerorgan 41 kann auf beliebige Weise für den genannten Informationsaustausch erfolgen, beispielsweise durch mechanische Wechselwirkung, elektrische Wechselwirkung, optische Wechselwirkung, elektromagnetische Wechselwirkung, Übertragung von Schwingungen, Ultraschallsignalen u. ä..

Für das in Fig. 1 dargestellte Ausführungsbeispiel ist das Indikationsorgan 40 mit einem Sender 42 ausgebildet, über welchen die Informationen als wellenförmiges Signal übertragen werden. In diesem Fall ist das Empfängerorgan 41 als Empfänger 43 für die Wellen und/oder Decoder 43 ausgebildet, welcher in die elektronische Steuereinheit 39 integriert ist oder mit dieser kommuniziert. Über die elektronische Steuereinheit 39 kann dann auf Grundlage der empfangenen und decodierten Information die Veranlassung geeigneter Maßnahmen erfolgen, beispielsweise eine Beeinflussung der Steuerung der Last- und Regenerationsphasen, der Schaltstellungen der Überströmventile 34-38 des Regenerationsventils 23 und des Druckreglers 17 und/oder des Kompressors erfolgen. Vorzugsweise ist der Sender 42 als RFID-Element 44 ausgebildet. Möglich ist auch, dass das Indikationsorgan 40 mit einer CPU 54 mit Speichereinheit 46 ausgebildet ist. Entsprechend kann auch das Empfängerorgan 41 mit einer CPU 47 und/oder einer Speichereinheit 48 ausgestattet sein.

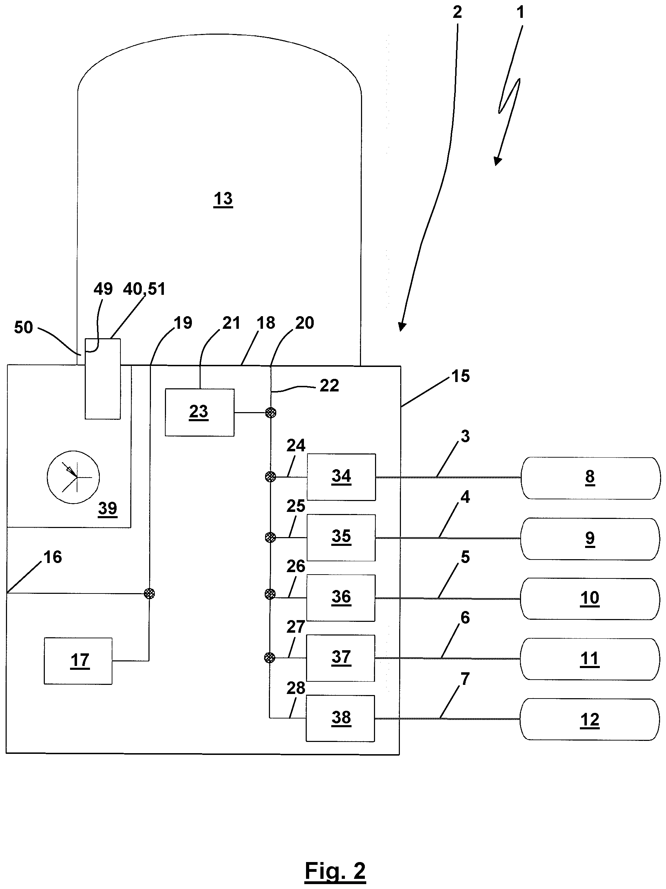

Fig. 2 zeigt eine weitere Ausgestaltung von Indikationsorgan 40 und Empfängerorgan 41. Hier ist das Indikationsorgan 40 in einer Ausnehmung 49 der Lufttrocknungskartusche 13 integriert und nach außen durch einen Vorsprung 50 abgedeckt. Hier kann das Indikationsorgan 40 mit einer Kontur 51 ausgebildet sein, welche in Wechselwirkung tritt mit dem Empfängerorgan 41, welches in diesem Fall als optische oder mechanische Abtastung der Kontur 51 ausgebildet sein kann. Vielfältige andere Ausgestaltungsformen sind ebenfalls möglich. Beispielsweise kann das Indikationsorgan 40 auch als ein- oder zweidimensionaler Barcode ausgebildet sein, welcher dann durch das Empfängerorgan 41 optisch abgetastet wird.

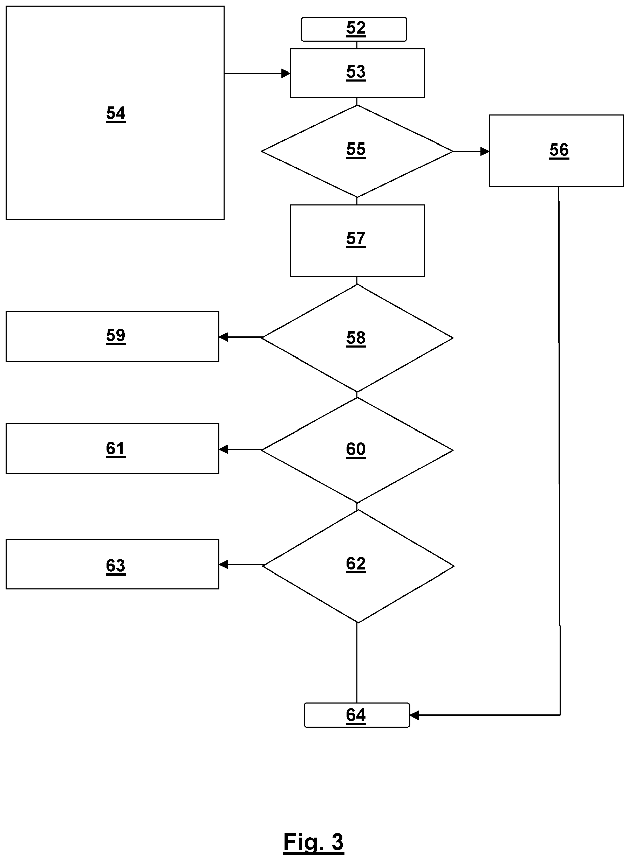

Fig. 3 zeigt schematisch einen erfindungsgemäßen Verfahrensablauf. Das erfindungsgemäße Verfahren beginnt in einem Verfahrensschritt 52. Dieser Beginn kann durchgeführt werden nach einem Austausch der Lufttrocknungskartusche, mit einer Inbetriebnahme des Fahrzeugs oder der Druckluftanlage, nach vorbestimmten Zyklen eines Betriebs der Druckluftanlage u. ä. In einem Verfahrensschritt 53 werden Eingangsdaten 54 verarbeitet. Hierbei kann es sich beispielsweise um Fahrzeugdaten, wie eine Drehzahl eines Antriebsaggregates, welche Rückschluss auf eine Drehzahl eines hiervon angetriebenen Kompressors zulässt, eine Drehzahl eines Kompressors, eine pneumatische Kenngrößen der Druckluftanlage wie insbesondere Druckluftbehältergrößen, einen Status einer Befüllung, also einen Indikator für die Druckluftmenge in der Druckluftanlage, eine Temperatur der Umgebung, die Feuchtigkeit der Luft in der Umgebung, die der Druckluftanlage zugeführt wird, eine Feuchtigkeit in einem Druckluftbehälter 8-12 oder einen Kondensatpegel in diesem, eine Kenngröße für eine oder mehrere bestimmungsgemäße Lufttrocknungskartuschen 13, ein GPS-Signal für eine Indikation der aktuellen Position des Fahrzeugs, eine Betriebsdauer der Luftaufbereitungsanlage u. ä. handeln. Diese Daten können getriggert durch den Verfahrensschritt 53 im Betrieb ermittelt werden, von einem flüchtigen oder permanenten Speicher ausgelesen werden und/oder über einen CAN-Bus bereitgestellt werden.

In dem anschließenden Verfahrensschritt 55 wird ermittelt, ob die in der Luftaufbereitungsanlage 2 eingesetzte Lufttrocknungskartusche 13 bestimmungsgemäß ist, was durch Kommunikation zwischen dem Indikationsorgan 40 und dem Empfängerorgan 41 und geeignete Decodierung sowie weitere Verarbeitung, unter Umständen mit einem Vergleich mit Eingangsdaten 54, erfolgen kann.

Ist Ergebnis des Verfahrensschritts, dass eine bestimmungsgemäße Lufttrocknungskartusche 13 oder Original-Lufttrocknungskartusche eingesetzt ist, verzweigt das Verfahren zu dem Verfahrensschritt 56, mit welchem der an sich beabsichtigte Betrieb der Luftaufbereitungsanlage 2 erfolgt mit geeigneter Ansteuerung der beteiligten Ventilelemente, Wahl von Druckschwellen für Beginn und Ende von Last- und Regenerationsphasen u. ä., wobei beliebige an sich bekannte Verfahren zum Betrieb der Luftaufbereitungsanlage 2, s. beispielsweise dein Eingangs genannten Stand der Technik, zum Einsatz kommen können.

Ist Ergebnis des Verfahrensschritts 55 allerdings, dass die eingesetzte Lufttrocknungskartusche 13 nicht bestimmungsgemäß ist, verzweigt das Verfahren zu einem Verfahrensschritt 57, in welchem automatisiert eine Adaption des Verfahrens zum Betrieb der Luftaufbereitungsanlage 2 erfolgt. Hier sind beliebige Eingriffsmöglichkeiten denkbar, beispielsweise eine Veränderung der Parameter, welche die Zeitdauer der Last- und Regenerationsphase betreffen oder die zugeordneten Druckluftströme, Abschaltdrücke, Systemdrücke, eine Begrenzung der Fördermenge von Druckluft in der Lastphase, beispielsweise durch Vorgabe eines Grenzwertes für die Drehzahl des Kompressors oder eine Dauer der Lastphase, eine Erhöhung der Regenerationsfrequenz. Beispielsweise kann eine Änderung des Systemdrucks bei der Erkennung einer nicht bestimmungsgemäßen Lufttrocknungskartusche 13 von einem Druck auf 12,5 bar auf 10 bar erfolgen, was die geeignete Ansteuerung des Druckreglers 17 und/oder der Überströmventile 34-38 erfordert. Optional kann in einem Verfahrensschritt 58 eine Information 59 an den Fahrer des Fahrzeugs übermittelt werden, die unmittelbar oder mittelbar den Fahrer darüber informiert, dass keine bestimmungsgemäße Lufttrocknungskartusche 13 eingesetzt ist (bspw. Anzeige "keine Original-Kartusche"; Aufleuchten einer Warnlampe) und/oder den Fahrer informiert, dass in dem Verfahrensschritt 57 die Betriebsparameter der Luftaufbereitungsanlage 2 verändert worden sind, beispielsweise mit Anzeige eines veränderten Systemdrucks u. ä.

Möglich ist, dass in einem Verfahrensschritt 60 eine überwachte Betriebsdauer der Lufttrocknungskartusche 13 und/oder der Luftaufbereitungsanlage 2, welche in einer Kilometerleistung des Fahrzeugs oder einem pneumatischen Wert wie das Druckluftvolumen in der Luftaufbereitungsanlage 2 erfasst sein kann, angepasst wird, sodass die nicht bestimmungsgemäße Lufttrocknungskartusche 13 mit einer verringerten Betriebszeit eingesetzt wird, bis der Fahrer aufgefordert wird, die Werkstatt aufzusuchen, sei es im Rahmen einer größeren Wartung oder Inspektion oder ausschließlich für einen Tausch der Kartusche. Auch hier kann eine entsprechende Information 61 an den Fahrer gegeben werden, beispielsweise mit einem Hinweis auf die Restbetriebsdauer bis zum Aufsuchen der Werkstatt.

Ebenfalls möglich ist, dass in einem Verfahrensschritt 62 ein Fehlereintrag 63 in einen permanenten Fehlerspeicher erzeugt wird. Liegt ein derartiger Fehlereintrag 63 beispielsweise länger als zwei Wochen vor, kann zeitlich verzögert eine Fehleranzeige an den Fahrer erfolgen. Ebenfalls möglich ist, dass lediglich im Beanstandungsfall oder bei Aufsuchen einer Werkstatt der Fehlerspeicher ausgelesen wird, womit dann der Hersteller der Luftaufbereitungsanlage 2 oder der Lufttrocknungskartusche 13 auf Grundlage des Fehlereintrags 63 nachweisen kann, dass ein geltend gemachter Mangel des Betriebs der Luftaufbereitungsanlage 2 oder ein vorzeitiges Versagen einer Lufttrocknungskartusche 13 darauf beruht, dass keine bestimmungsgemäße Lufttrocknungskartusche eingesetzt worden ist.

Weiterhin möglich ist, dass auf Grundlage eines Fehlereintrags 63 eine Einschränkung einer Garantie oder einer Kulanzleistung des Herstellers erfolgt. Erfolgt mit der Übermittlung der Eingangsdaten 54 auch die Übermittlung eines Standorts des Fahrzeugs, insbesondere über ein GPS-Signal, kann eine Information an den Fahrer lediglich dann gegeben werden, wenn sich das Fahrzeug in mindestens einem ausgewählten Territorium, beispielsweise im Fuhrpark des Besitzers, in der Nähe einer Werkstatt u. ä. befindet, wo tatsächlich die Möglichkeit besteht, dass die nicht bestimmungsgemäße Lufttrocknungskartusche 13 ausgewechselt wird gegen eine bestimmungsgemäße Lufttrocknungskartusche 13. Möglich ist auch, dass, vorzugsweise ebenfalls an ausgewählten Orten, bei der Erkennung einer nicht bestimmungsgemäßen Lufttrocknungskartusche 13 die Befüllung der Luftaufbereitungsanlage 2 unterbunden wird, sodass beispielsweise das Lösen einer Parkbremse überhaupt nicht möglich ist und das Fahrzeug stillgesetzt wird. Es versteht sich, dass die Verfahrensschritte 57, 58, 60, 62 kumulativ oder alternativ zum Einsatz kommen können. Um lediglich ein Beispiel zu nennen, kann der Verfahrensschritt 57 entfallen, sodass der Betrieb der Luftaufbereitungsanlage 2 unverändert so erfolgt, als wäre eine bestimmungsgemäße Lufttrocknungskartusche 13 vorhanden. Es wird dann aber dem Fahrer im Verfahrensschritt 58 die Information 59 übermittelt, dass die Lufttrocknungskartusche 13 nicht bestimmungsgemäß ist. Die weiteren Verfahrensschritte 60, 62 können dann eingesetzt werden, ohne dass dies zwingend der Fall ist. Als anderes Extrembeispiel kann der Verfahrensschritt 57 mit einer Anpassung des Betriebs der Luftaufbereitungsanlage 2 Anwendung finden, während die Verfahrensschritte 58, 60 und 62 entfallen.

Das erfindungsgemäße Verfahren findet seine Beendigung im Verfahrensschritt 64. Die Verfahrensschritte können ausgeführt werden in einer CPU 54 oder 47, wobei auch eine Kommunikation zwischen den CPUs oder mit weitern CPUs möglich ist.

Möglich ist, dass die Lufttrocknungskartusche 13, das Indikationsorgan 40 oder die Luftaufbereitungsanlage 2 über einen Sender verfügt, über welchen Informationen betreffend den Typ der Lufttrocknungskartusche an eine andere Elektronikeinheit oder CPU im Fahrzeug übertragen werden, welche dann beispielsweise über einen CAN-Bus der CPU der Luftaufbereitungsanlage 2 zur Verfügung gestellt werden. In besonderer Ausgestaltung dieses Gedankens kann beispielsweise eine Elektronikeinheit oder CPU für ein Reifendrucküberwachungssystem vorhanden sein, welches, neben empfangenen Funksignalen betreffend den Reifendruck, auch Signale mit Informationen zu dem Typ der Lufttrocknungskartusche empfängt.

### BEZUGSZEICHENLISTE

- 1: Druckluftanlage
- 2: Luftaufbereitungsanlage
- 3: Verbraucherkreis
- 4: Verbraucherkreis
- 5: Verbraucherkreis
- 6: Verbraucherkreis
- 7: Verbraucherkreis
- 8: Druckluftbehälter
- 9: Druckluftbehälter
- 10: Druckluftbehälter
- 11: Druckluftbehälter
- 12: Druckluftbehälter
- 13: Lufttrocknungskartusche
- 14: Lufttrockner
- 15: Gehäuse
- 16: Eingangsanschluss
- 17: Druckregler
- 18: Schnittstelle
- 19: Eingangsanschluss
- 20: Ausgangsanschluss
- 21: Regenerationsanschluss
- 22: Zentralleitung
- 23: Regenerationsventil
- 24: Leitungszweig
- 25: Leitungszweig
- 26: Leitungszweig
- 27: Leitungszweig
- 28: Leitungszweig
- 29: Ausgangsanschluss
- 30: Ausgangsanschluss
- 31: Ausgangsanschluss
- 32: Ausgangsanschluss
- 33: Ausgangsanschluss
- 34: Überströmventil
- 35: Überströmventil
- 36: Überströmventil
- 37: Überströmventil
- 38: Überströmventil
- 39: elektronische Steuereinheit
- 40: Indikationsorgan
- 41: Empfängerorgan
- 42: Sender
- 43: Empfänger
- 44: RFID-Element
- 45: CPU
- 46: Speichereinheit
- 47: CPU
- 48: Speichereinheit
- 49: Ausnehmung
- 50: Vorsprung
- 51: Kontur
- 52: Verfahrensschritt
- 53: Verfahrensschritt
- 54: Eingangsdaten
- 55: Verfahrensschritt
- 56: Verfahrensschritt
- 57: Verfahrensschritt
- 58: Verfahrensschritt
- 59: Information
- 60: Verfahrensschritt
- 61: Information
- 62: Verfahrensschritt
- 63: Fehlereintrag
- 64: Verfahrensschritt

## Patentansprüche

1. Verfahren zum Betrieb einer eine Lufttrocknungskartusche (13) aufweisenden Luftaufbereitungsanlage (2) eines Fahrzeugs, welche zwischen einen Kompressor und Verbraucherkreise (3-7) zwischengeschaltet Ist, wobei bei dem Verfahren automatisiert Informationen betreffend den Typ der Lufttrocknungskartusche (13) erfasst und verarbeitet werden und die Betriebsweise der Luftaufbereitungsanlage (2) automatisch an die automatisiert erfassten Informationen betreffend den Typ der Lufttrocknungskartusche (13) angepasst wird, **dadurch gekennzeichnet, dass** bei automatischer Erkennung eines nicht bestimmunggemäßen Typs der Lufttrocknungskartusche (13) automatisiert
a) eine Anpassung einer Förderleistung eines Kompressors, einer Dauer einer Lastphase eines Kompressors und/oder eines Abschaltdrucks des Kompressors und/oder
b) eine Anpassung mindestens eines Systemdrucks In einem Verbraucherkreis (3-7) der Druckluftanlage (13)
erfolgt.

2. Verfahren nach Anspruch 1, **dadurch gekenntzeichnet,** dass bei automatischer Erkennung eines nicht bestimmungsgemäßen Typs der Lufttrocknungskartusche (13) automatisiert
a) ein Fehlersignal (information 59) erzeugt wird,
b) eine Anpassung der vorbestimmten Restnutzungszeit der Lufttrocknungskartusche (13) oder der vorbestimmten Zeitspanne bis zum nächsten Werkstattaufenthalt für das Fahrzeug erfolgt und/oder
c) eine Anpassung eines Regenerationsluftstroms oder einer Regenerationszeitdauer oder der Einleitung einer Regeneration erfolgt.

3. Verfahren nach Anspruch 1 oder 2, **dadurch gekenntzeichnet,** dass bei automatischer Erkennung eines nicht bestimmungsgemäßen Typs der Lufttrocknungskartusche (13) ein Fehleraintrag (63) in einen Fehlerspeicher erzeugt wird.

4. Verfahren nach einem der Ansprüche 1 bis 3, **dadurch gekennzeichnet, dass** bei automatischer Erkennung eines nicht bestimmungsgemäßen Typs der Lufttrocknungskartusche (13) automatisiert eine information (59) an den Fahrer übermittelt wird,

5. Verfahren nach einem der Ansprüche 1 bis 4, **dadurch gekennzeichnet, dass** ein Indikationsorgan (40) für den Typ der Lufttrocknungskartusche (13) verwendet wird, welches eine automatische Weitergabe von Informationen betreffend den Typ der Lufttrocknungskartusche (13) in dem Fahrzeug, insbesondere in einem Lufttrockner oder einer Luftaufbereitung, ermöglicht.

6. Verfahren nach Anspruch 5, **dadurch gekennzeichnet, dass** das indikationsorgan (40) in einer Ausnehmung (49) und/oder hinter einem Vorsprung (50) angeordnet Ist oder abgedeckt ist.

7. Verfahren nach Anspruch 5 oder 6, **dadurch gekenntzeichnet,** dass als indikationsorgan (40) ein Material eines Bauelements der Lufttrocknungskartusche (13) mit einem Zusatzstoff dotiert ist, der sensiert wird.

8. Verfahren nach Anspruch 5, **dadurch gekennzeichnet, dass** das Indikationsorgan (40) eine mit dem Typ der Lufttrocknungskartusche (13) korrellerende Kontur (51) besitzt, welche zur Erkennung des Typs der Lufttrocknungskartusche (13) erfasst wird.

9. Verfahren nach einem der Ansprüche 5 bis 8, **dadurch gekennzeichnet, dass** das indikationsorgan (40) einen Sender (42) besitzt, über welchen Informationen zum Typ der Lufttrocknungskartusche (13) übertragen werden.

10. Verfahren nach Anspruch 9, **dadurch gekennzeichnet, dass** ein indikationsorgan (40) verwendet wird, welches mit einem RFID-Element (44) ausgestattet ist.

11. Verfahren nach einem der Ansprüche 5 bis 10, **dadurch gekennzeichnet, dass** ein Gehäuse verwendet wird, In das eine CPU (45) mit Speichereinheit (46) Integriert ist.

12. Verfahren nach Anspruch 11, **dadurch gekennzeichnet, dass** eine Speichereinheit (46) verwendet wird, die einen Speicherbereich aufweist, in dem
- den Hersteller der Lufttrocknungskartusche (13),
- die Bauart der Lufttrocknungskartusche (13),
- den Herstellungsprozess der Lufttrocknungskartusche (13),
- den Betrieb der Lufttrocknungskartusche (13)
betreffende Daten gespeichert werden.

13. Verfahren nach einem der Patentansprüche 1 bis 12, **dadurch gekennzeichnet, dass** ein Empfängerorgan (41) verwendet wird, welches mit dem indikationsorgan (40) der Lufttrocknungskartusche (13) In Wechselwirkung tritt, so dass Informationen betreffend den Typ der Lufttrocknungskartusche (13) von der Luftaufbereitungsanlage (2) automatisiert erkannt werden.

## Claims

1. Method for operating an air processing system (2) of a vehicle comprising an air dryer cartridge (13), the air processing system (2) being interposed between a compressor and consumer circuits (3-7), where in the method in an automatic way information related to the type of the air dryer cartridge (13) is sensed and processed and the mode of operation of the air processing system (2) is automatically adapted to the information related to the type of the air dryer cartridge (13) sensed in an automatic way, **characterised in that** when automatically detecting a non-intended type of air dryer cartridge (13) automatically
a) the supply rate of a compressor, the duration of a load phase of a compressor and/or the switch-off pressure of the compressor is adapted and/or
b) at least one system pressure in a consumer circuit (3-7) of the pressurized air system (13) is adapted.

2. Method of claim 1, **characterised in that** when automatically detecting a non-intended type of air dryer cartridge (13) automatically
a) an error signal (information 59) is generated,
b) the predetermined remaining lifetime of the air dryer cartridge (13) or the predetermined time span up to the next workshop stop for the vehicle is adapted and/or
c) a stream of regeneration air or a time duration of the regeneration or the initiation of a regeneration is adapted.

3. Method of claim 1 or 2, **characterised in that** when automatically detecting a non-intended type of air dryer cartridge (13) an error log (63) is generated in an error storage unit.

4. Method of one of claims 1 to 3, **characterised in that** when automatically detecting a non-intended type of air dryer cartridge (13) automatically an information (59) is transmitted to the driver.

5. Method of one of claims 1 to 4, **characterised in that** an indication means (40) for the type of the air dryer cartridge (13) is used which provides the option of an automatic transfer of information related to the type of air dryer cartridge (13) in the vehicle, in particular in an air dryer or an air processing device.

6. Method of claim 5, **characterised in that** the indication means (40) is arranged or covered in a recess (49) and/or behind a protrusion (50).

7. Method of claim 5 or 6, **characterised in that** as the indication means (40) a material of a component of the air dryer cartridge (13) is endowed with an additive which is sensed.

8. Method of claim 5, **characterised in that** the indication means (40) comprises a contour (51) correlating with the type of the air dryer cartridge (13), the contour (51) being sensed for detecting the type of air dryer cartridge (13).

9. Method of one of claims 5 to 8, **characterised in that** the indication means (40) comprises a transmitter (42) which transmits information related to the type of air dryer cartridge (13).

10. Method of claim 9, **characterised in that** an indication means (40) is used which comprises a RFID-element (44).

11. Method of one of claims 5 to 10, **characterised in that** a housing is used into which a CPU (45) comprising a storage unit (46) is integrated.

12. Method of claim 11, **characterised in that** a storage unit (46) is used which comprises a storage section wherein data related to
- the manufacturer of the air dryer cartridge (13),
- the mode of construction of the air dryer cartridge (13),
- the manufacturing process of the air dryer cartridge (13),
- the operation of the air dryer cartridge (13)
is stored.

13. Method of one of claims 1 to 12, **characterised in that** a receiving means (41) is used which interacts with the indicator means (40) of the air dryer cartridge (13) so that information related to the type of the air dryer cartridge (13) is automatically sensed by the air processing system (2).

## Revendications

1. Procédé de fonctionnement d'une installation de traitement de l'air (2) d'un véhicule, présentant une cartouche de séchage de l'air (13), laquelle installation est intercalée entre un compresseur et des circuits de consommateurs (3-7), des informations concernant le type de cartouche de séchage de l'air (13) étant captées et traitées de façon automatisée dans le procédé, et le mode de fonctionnement de l'installation de traitement de l'air (2) étant adapté automatiquement aux informations concernant le type de cartouche de séchage de l'air (13) détectées de façon automatisée, **caractérisé en ce que,** lors de l'identification automatique d'un type de cartouche de séchage de l'air (13) non conforme, il est effectué de façon automatisée
a) une adaptation d'un débit d'un compresseur, d'une durée d'une phase de charge d'un compresseur et/ou d'une pression de coupure du compresseur et/ou
b) une adaptation d'au moins une pression de système dans un circuit de consommateurs (3-7) de l'installation d'air comprimé (13).

2. Procédé selon la revendication 1, **caractérisé en ce que,** lors de l'identification automatique d'un type de cartouche de séchage de l'air (13) non conforme, il est produit de façon automatisée
a) un signal d'erreur (information 59),
il est effectué de façon automatisée
b) une adaptation du temps d'utilisation résiduel prédéfini de la cartouche de séchage de l'air (13) ou du laps de temps prédéfini jusqu'au prochain passage en atelier pour le véhicule et/ou
c) une adaptation d'un flux d'air de régénération ou d'une durée de régénération ou de l'introduction d'une régénération.

3. Procédé selon la revendication 1 ou 2, **caractérisé en ce que,** lors de l'identification automatique d'un type de cartouche de séchage de l'air (13) non conforme, une inscription d'erreur (63) est produite dans une mémoire d'erreurs.

4. Procédé selon l'une des revendications 1 à 3, **caractérisé en ce que,** lors de l'identification automatique d'un type de cartouche de séchage de l'air (13) non conforme, une information (59) est envoyée au conducteur de façon automatisée.

5. Procédé selon l'une des revendications 1 à 4, **caractérisé en ce qu'il** est utilisé un organe d'indication (40) pour le type de cartouche de séchage de l'air (13) qui permet un transfert automatique d'informations concernant le type de cartouche de séchage de l'air (13) dans le véhicule, en particulier dans un sécheur d'air ou dans un traitement d'air.

6. Procédé selon la revendication 5, **caractérisé en ce que** l'organe d'indication (40) est disposé ou couvert dans un creux (49) et/ou derrière une saillie (50).

7. Procédé selon la revendication 5 ou 6, **caractérisé en ce que,** en tant qu'organe d'indication (40), un matériau d'un composant de la cartouche de séchage de l'air (13) est doté d'un additif qui est détecté.

8. Procédé selon la revendication 5, **caractérisé en ce que** l'organe d'indication (40) possède un contour (51) qui est en corrélation avec le type de cartouche de séchage de l'air (13) et qui est capté pour l'identification du type de cartouche de séchage de l'air (13).

9. Procédé selon l'une des revendications 5 à 8, **caractérisé en ce que** l'organe d'indication (40) possède un émetteur (42) par le biais duquel sont transmises des informations sur le type de cartouche de séchage de l'air (13).

10. Procédé selon la revendication 9, **caractérisé en ce qu'il** est utilisé un organe d'indication (40) qui est équipé d'un élément RFID (44).

11. Procédé selon l'une des revendications 5 à 10, **caractérisé en ce qu'**il est utilisé un boîtier qui est intégré dans un CPU (45) avec unité de mémoire (46).

12. Procédé selon la revendication 11, **caractérisé en ce qu'il** est utilisé une unité de mémoire (46) qui présente une zone de mémoire dans laquelle sont enregistrées des données concernant
- le fabricant de la cartouche de séchage de l'air (13),
- la conception de la cartouche de séchage de l'air (13),
- le processus de fabrication de la cartouche de séchage de l'air (13),
- le fonctionnement de la cartouche de séchage de l'air (13).

13. Procédé selon l'une des revendications 1 à 12, **caractérisé en ce qu'il** est utilisé un organe récepteur (41) qui entre en interaction avec l'organe d'indication (40) de la cartouche de séchage de l'air (13) de telle sorte que des informations concernant le type de cartouche de séchage de l'air (13) de l'installation de traitement de l'air (2) sont identifiées de façon automatisée.
